# EUROPÄISCHE PATENTSCHRIFT

(11) **EP 1 556 179 B1**
(45) Veröffentlichungstag und Bekanntmachung des Hinweises auf die Patenterteilung: **18.07.2007**
(21) Anmeldenummer: 02782738.5
(22) Anmeldetag: 21.10.2002
(51) Int. Cl.: B21C 1/16, H02K 41/02

(54) **VORRICHTUNG UND VERFAHREN ZUM UMFORMEN VON STANGENFÖRMIGEN GÜTERN INSBESONDERE ZUM DURCHZIEHEN UND DURCHDRÜCKEN**
DEVICE AND METHOD FOR RESHAPING BAR-SHAPED MATERIALS PARTICULARLY FOR DRAWING AND EXTRUDING
PROCEDE ET DISPOSITIF POUR FACONNER DES PRODUITS EN FORME DE BARRES NOTAMMENT PAR ETIREMENT ET EXTRUSION

(43) Veröffentlichungstag der Anmeldung: 27.07.2005
(73) Patentinhaber: BL Chemie GmbH & Co. KG, 58809 Neuenrade (DE)
(72) Erfinder: WITTE, Werner, 59425 Unna (DE); ILLGEN, Lothar, 58640 Iserlohn (DE); BILSTEIN, Peter, 58708 Menden (DE)
(74) Vertreter: Graefe, Jörg
(86) Internationale Anmeldenummer: PCT/DE2002/003965
(87) Internationale Veröffentlichungsnummer: WO 2004/039513

(56) Entgegenhaltungen:
- WO-A-01/48888
- DE-A- 1 959 873
- DE-A- 10 013 833
- US-A- 3 911 706

## Beschreibung

Die Erfindung betrifft eine Vorrichtung und ein Verfahren zum Umformen von elektrisch leitenden und/oder magnetisierbaren stangenförmigen Gütern insbesondere zum Durchziehen und Durchdrücken.

Eine derartige Vorrichtung weist eine Matrize mit einer Düse auf, welche das Werkzeug zum Umformen bildet. Ferner weist die Vorrichtung einen Induktor eines elektrischen Linearmotors auf. Dieser Induktor weist zumindest eine erste Gruppe zumindest mit ersten Spulen auf, wobei diese ersten Spulen der ersten Gruppe axial nebeneinander angeordnet sind und das freibleibende Zentrum der Spulen einen Kanal ausbildet. In diesen Kanal wird das umzuformende stangenförmige Gut eingebracht, welches elektrisch leitend und magnetisierbar ist. Dieses stangenförmige Gut bildet den Anker des Linearmotors. Durch das Erzeugen eines magnetischen Wanderfeldes in dem Kanal des Induktors durch den Induktor wird der Anker, d. h. das stangenförmige Gut in dem Kanal fortbewegt. Bei einer entsprechenden Leistung des Induktors kann dabei das stangenförmige Gut durch die Düse der Matrize bewegt werden, wodurch das stangenförmige Gut umgeformt wird.

Eine derartige Vorrichtung ist beispielsweise aus der Druckschrift US 3,911,706 A bekannt. Die Druckschrift offenbart eine Linearziehmaschine zum Durchziehen eines stangenförmigen Guts durch die Ziehdüse einer Matrize. Dazu ist in Ziehrichtung hinter der Ziehdüse liegend der Induktor angeordnet. Das auf nicht näher offenbarte Art und Weise in die Ziehdüse eingeführte stangenförmige Gut wird in Ziehrichtung hinter der Ziehdüse durch den Induktor geführt, wodurch der Induktor in Wechselwirkung mit dem als Anker wirkenden stangenförmigen Ziehgut einen Linearmotor bildet, welches das stangenförmige Ziehgut durch die Ziehdüse hindurchzieht und so umformt.

Der Nachteil der in dieser Druckschrift offenbarten Ziehmaschinen ist, dass die von dem Induktor in Wechselwirkung mit dem Ziehgut erzeugten Kräfte nur dann ausreichend für einen Umformungsvorgang insbesondere größerer Ziehgüter sind, wenn der Induktor, d. h. die Ziehmaschine eine Länge von mehreren hundert Metern aufweist. Eine derartige Ziehmaschine ist jedoch unrealistisch, da sie zu vertretbaren Kosten nicht herzustellen und zu betreiben ist.

Wegen der vorgenannten Nachteile wurde die Entwicklung einer derartigen Linearziehmaschine in der Vergangenheit nicht weiter verfolgt. Vielmehr konzentrierte sich die Entwicklungsarbeit auf die Verbesserung der Linearziehmaschinen herkömmlicher Art. Eine derartige herkömmliche Ziehmaschine ist beispielsweise aus der Druckschrift DE 197 03 878 A1 bekannt. Die in dieser Druckschrift offenbarte Linearziehmaschine weist zwei auf einer Bahn angetrieben verfahrbare Ziehwagen auf, wobei jedem Ziehwagen in Ziehrichtung hintereinanderliegende sich jedoch stückweise überlappende Fahrstrecken zugeordnet sind. Diese Ziehwagen deren Fahrstrecken beide in Ziehrichtung hinter der Ziehdüse vorgesehen sind, weisen Klemmbacken auf. Mit diesen Klemmbacken wird das Ziehgut von den beiden Ziehwagen im Wechsel durch die Ziehdüse gezogen. Die Ziehwagen sind dabei mit herkömmlichen Antriebsmitteln versehen. D. h. entweder weisen derartige Ziehwagen eigene Antriebe, zumeist Elektromotoren, auf oder aber sie werden über Getriebeeinrichtungen von einem gemeinsamen Antrieb für beide Ziehwagen angetrieben. Der Antrieb und die aufeinander abgestimmte Ansteuerung der Ziehwagen ist zwar aufwendig, doch mangels Alternativen hat sich diese Technik in der Vergangenheit bei Linearziehmaschinen durchgesetzt, da das Ziehen mittels der in der Druckschrift US 3,911,706 A offenbarten im Grunde einfachen Antriebstechnik nicht sinnvoll umsetzbar war.

Der vorliegenden Erfindung lag daher die Aufgabe zugrunde, eine aus der Druckschrift US 3,911,706 A bekannte Linearziehmaschine so fortzubilden, dass ein sinnvoller Einsatz einer erfindungsgemäßen Linearziehmaschine möglich ist. Insbesondere sollte dabei die erfindungsgemäße Vorrichtung geringere Ausmaße haben, als die aus dem Stand der Technik bekannte Vorrichtung.

Ein weiteres Anliegen der vorliegenden Erfindung war es auch für das Einführen des umzuformenden Gutes in die Düse der Matrize zu erleichtern. Ebenso sollte es möglich sein, mit der erfindungsgemäßen Vorrichtung nicht nur das stangenförmige Gut durch Ziehen (Durchziehen) umzuformen, sondern auch durch Durchdrücken des umzuformenden stangenförmigen Gutes durch die Düse der Matrize der Vorrichtung.

Die erfindungsgemäßen Aufgaben werden durch eine Vorrichtung gemäß Anspruch 1 gelöst. Ein Verfahren zum Umformen von stangenförmigen elektrisch leitenden und/oder magnetisierbaren Gütern, welches den Nachteilen der aus dem Stand der Technik bekannten Verfahren abhilft ist in Anspruch 17 beschrieben. Einzelheiten und Weiterbildungen der erfindungsgemäßen Vorrichtung beziehungsweise des erfindungsgemäßen Verfahrens ergeben sich aus den jeweiligen Unteransprüchen.

Der erfindungsgemäßen Vorrichtung und dem erfindungsgemäßen Verfahren liegt die Erkenntnis zugrunde, dass die in dem Kanal der aus dem nächstliegenden Stand der Technik bekannten Vorrichtung (siehe US 3,911,706 A) vorliegende magnetische Flussdichte nicht ausreichend ist, um eine Vorrichtung kompakter Größe mit ausreichender Leistung zu ermöglichen. Um eine Vorrichtung mit ausreichender Leistung, d. h. insbesondere ausreichender Kraftentwicklung zur Verfügung zu haben, muss diese Vorrichtung erfindungsgemäß in dem durch den Induktor gebildeten Kanal ein magnetisches Wanderfeld mit einer magnetischen Flussdichte mit einer Amplitude von größer als B= 1 Tesla erzeugen können. In Abhängigkeit von der Bewegungsrichtung des magnetischen Wanderfeldes kann dabei durch die Wechselwirkung zwischen dem Induktor und dem umzuformenden Gut (Anker) eine Kraft in Richtung zur Düse oder von der Düse weg genutzt werden. Bei einer Kraftrichtung zur Düse hin kann durch diese Kraft das Gut in die Düse eingeführt werden und/oder die Vorrichtung zum Durchdrücken genutzt werden. Zum Durchdrücken ist dann lediglich vorteilhaft die Düse bezüglich der ersten Gruppe von Spulen in entgegengesetzte Richtung angeordnet wie zum Durchziehen.

Gemäß der Erfindung kann der Induktor einer erfindungsgemäßen Vorrichtung eine zweite Gruppe zumindest mit ersten Spulen aufweisen. Die erste Gruppe von Spulen und die zweite Gruppe von Spulen können dann vorteilhaft auf entgegengesetzten Seiten der Matrize angeordnet sein, wobei die Spulen beider Gruppen dann bevorzugt koaxial zur Düse der Matrize sind. Mit einer derartigen Anordnung der Spulen des Induktors in zwei Gruppen in Transportrichtung des umzuformenden stangenförmigen Gutes vor und hinter der Düse der Matrize ist es möglich, das zu transportierende Gut sowohl durch die Düse hindurchzudrücken, als auch das umzuformende stangenförmige Gut durch die Düse der Matrize hindurchzuziehen. Das Durchziehen und das Durchdrücken kann dabei unabhängig voneinander erfolgen, d. h. das stangenförmige Gut wird entweder ausschließlich durchgedrückt oder aber ausschließlich durchgezogen. Ebenso ist es aber möglich, dass das Durchziehen und das Durchdrücken gleichzeitig erfolgt. D. h. die Spulen der zweiten Gruppe, welche in Transportrichtung des stangenförmigen Gutes vor der Matrize angeordnet sind, bewirken ein Durchdrücken, während gleichzeitig die Spulen der ersten Gruppe, welche in Transportrichtung hinter der Matrize angeordnet sind, ein Durchziehen des stangenförmigen Gutes bewirken. Mit einer solchen Vorrichtung zum gleichzeitigen Durchziehen und Durchdrücken ist eine höhere Umformung des umzuformenden Guts möglich.

Die erste Gruppe und gegebenenfalls die zweite Gruppe von Spulen des Induktors können gemäß der Erfindung zweite Spulen aufweisen, wobei diese zweiten Spulen die ersten Spulen umgreifen und koaxial zu den ersten Spulen angeordnet sind. Ferner können weitere Spulen nämlich dritte, vierte, ... Spulen vorgesehen sein, welche die Spulen der ersten und gegebenenfalls der zweiten Gruppe umgreifen und koaxial zu den zweiten, dritten, ... Spulen sind. Durch die Anordnung der zweiten, dritten, ... Spulen kann eine Erhöhung der magnetischen Flussdichte im Kanal erreicht werden. Derartige Induktoren sind zum Teil als Polysolenoid-Induktoren bekannt.

Erfindungsgemäß können zwischen den koaxial nebeneinander angeordneten Spulen jeweils Scheiben aus einem magnetisierbaren Material, die gegebenenfalls gelocht sein können, angeordnet sein. In diesen Scheiben kann der von den Spulen erzeugte magnetische Fluss gebündelt werden. Die Scheiben können einen äußeren Rand haben, welcher vorteilhaft zu einer Seite abgekröpft ist. Dieser abgekröpfte Rand kann dann eine benachbarte erste Spule oder ein Paket aus benachbarten und koaxial angeordneten Spulen (erste, zweite, dritte, ... Spulen) übergreifen. Derartige Spulen-Scheiben-Anordnungen sind auch als "pan-cake" Anordnungen bekannt.

Erfindungsgemäß kann die Vorrichtung Mittel zur Kühlung des umzuformenden stangenförmigen Guts aufweisen. Die Mittel zur Kühlung können den Kanal, in welchem das umzuformende stangenförmige Gut transportiert wird, mit einem ersten Kühlmedium beaufschlagen. Bei diesem ersten Kühlmedium kann es sich um Luft oder Öl oder ein anderes geeignetes Kühlmedium handeln. Dabei ist es ausreichend, wenn das Kühlmedium eine Temperatur von 0 bis 40 °C vorzugsweise Raumtemperatur aufweist.

Die elektrische Stromdichte in den Spulen ist vorteilhaft größer als J = 10 A/mm², um einen kompakten Bau zu erreichen.

Die Spulen können gemäß der Erfindung zumindest teilweise Leiter aufweisen, die einen spezifischen Widerstand von ρ= 0,017 * 10⁻⁶ Ωm oder weniger haben. Die Spulen können ebenso teilweise Leiter aufweisen, die supraleitend sind. Gemäß der Erfindung können supraleitende Leiter aus einem Material bestehen, welches eine Sprungtemperatur von größer als T= 77K hat. Die Spulen können ferner teilweise Leiter aufweisen, welche einen Kanal aufweisen, wodurch der Leiter als Hohlleiter ausgebildet ist. Ein solcher Kanal in einem Leiter kann mit einem zweiten Kühlmedium beaufschlagbar sein. Dadurch können die Leiter herabgekühlt werden, um die elektrische Leitfähigkeit des Leiters zu erhöhen. Ein derartiger Leiter mit einem Kanal ist vorteilhaft aus Silber, Gold bevorzugt jedoch aus Kupfer oder Aluminium hergestellt. Als Kühlmedium zum Kühlen dieses Leiters von innen dienen vorteilhaft Wasser, Öl, Stickstoff in flüssiger Form, Wasserstoff oder Neon.

Bei einem erfindungsgemäßen Verfahren wird in einem Schritt das zu verformende Gut in den Kanal eingeführt, in einem weiteren Schritt wird in dem Kanal ein magnetisches Wanderfeld mit einer magnetischen Flussdichte von mindestens B = 1 T erzeugt, welches einen Gradienten in Richtung des Kanals hat und in einem anderen Schritt wird das umzuformende Gut in die Düse der Matrize eingeführt. Die Reihenfolge der Schritte kann dabei beliebig variieren. Ebenso ist es möglich, dass der Schritt, welcher das Einführen des umzuformenden Gutes umfasst, in zwei Teilschritte aufgeteilt wird. Ebenso ist es möglich, dass der Schritt, welcher das Erzeugen des Wanderfelds umfasst in zwei Teile aufgeteilt wird. Auch bei einer derartigen Aufteilung ist die Reihenfolge der (Teil-) Schritte im Grunde genommen beliebig kombinierbar. Die Ansprüche 18 bis 21 sowie 23 und 24 geben hier nur bevorzugte Verfahren wieder.

Weitere Merkmale und Vorteile der vorliegenden Erfindung werden deutlich anhand der nachfolgenden Beschreibung bevorzugter Ausführungsbeispiele unter Bezugnahme auf die beiliegenden Abbildungen. Darin zeigen
- Fig. 1: eine schematische Darstellung eines Ausführungsbeispiels einer erfindungsgemäßen Vorrichtung,
- Fig. 2: eine schematische Darstellung durch den Induktor eines Ausführungsbeispiels einer erfindungsgemäßen Vorrichtung im Schnitt,
- Fig. 3: eine schematische Darstellung eines Ausführungsbeispiels einer erfindungsgemäßen Vorrichtung zum Durchziehen,
- Fig. 4: eine schematische Darstellung eines Ausführungsbeispiels einer erfindungsgemäßen Vorrichtung zum Durchdrücken und
- Fig. 5: eine schematische Darstellung eines Ausführungsbeispiels einer erfindungsgemäßen Vorrichtung zum Durchziehen und Durchdrücken.

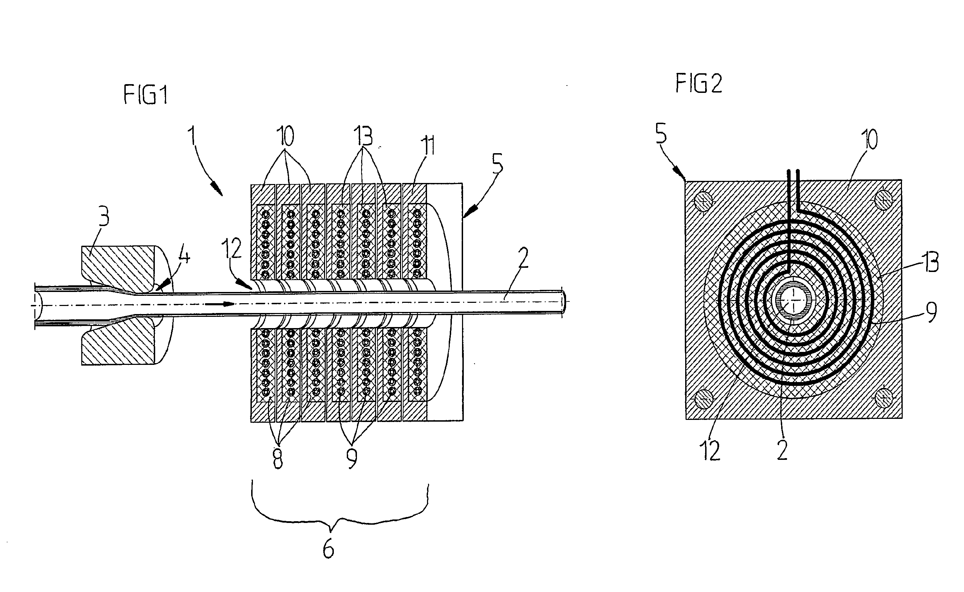

Zunächst wird auf Fig. 1 Bezug genommen. Die in Fig. 1 schematisch dargestellte erfindungsgemäße Vorrichtung 1 zum Durchziehen eines stangenförmigen Guts 2 weist eine Matrize 3 mit einer sich in der Bewegungsrichtung des Guts 2 verjüngenden Düse 4 auf. In Bewegungsrichtung des Guts 2 hinter der Matrize 3 ist ein Induktor 5 angeordnet. Dieser Induktor 5 bildet zusammen mit dem Gut 2, welches elektrisch und oder magnetisierbar leitend ist, einen elektrischen Linearmotor, wobei das umzuformende stangenförmige Gut 2 den Anker des Linearmotors bildet. Bei dem stangenförmigen Gut 2 handelt es sich im übrigen um ein Rohr, dessen äußerer Querschnitt verkleinert wird.

Der Induktor 5 weist eine Mehrzahl von ersten elektrischen Spulen 8 auf, bei denen die Wicklungen aus einem Leiter 9 in einer zu der Bewegungsrichtung des stangenförmigen Guts 2 senkrecht liegenden Ebene angeordnet sind. Der elektrische Leiter 9 ist dabei in einer Scheibe aus einem Isolator 13 eingebettet. Die freibleibenden Zentren dieser aus dem Isolator 13 gebildeten Scheiben beziehungsweise der Spulen 8 bilden einen Kanal 12 aus, welcher axial zur Bewegungsrichtung des stangenförmigen Guts 2 und axial zu der Düse 4 ist.

Zwischen den die Spulen 8 enthaltenden Scheiben aus dem Isolator 13 sind Scheiben 10 aus einem magnetisierbarem Material 10 angeordnet. Diese Scheiben 10 weisen einen zu einer Seite hin abgekröpften äußeren Rand 11 auf. Dieser abgekröpfte äußere Rand 11 der Scheiben 10 übergreift eine benachbarte Spule.

Die in der Fig. 1 dargestellten Spulen-Scheiben-Anordnungen, die im Wesentlichen den Induktor 5 bilden, sind in Bewegungsrichtung des stangenförmigen Guts 2 hinter der Matrize 3 als erste Gruppe 6 von ersten Spulen 8 angeordnet. Mittels dieser Spulen 8 der ersten Gruppe 6 wird ein elektrisches Wanderfeld erzeugt, welches die Bewegungsrichtung des stangenförmigen Guts 2 vorgibt. Das magnetische Wanderfeld, welches unter anderem in den magnetisierbaren Scheiben 11 geführt ist, weist im Zentrum des durch den Induktor 5 ausgebildeten Kanal 12 eine magnetische Flussdichte von mindestens 1 T auf. Dieses magnetische Wanderfeld erzeugt in dem stangenförmigen Gut elektrische Wirbelfelder und somit einen Stromfluss in dem stangenförmigen Gut 2. Durch diesen in dem stangenförmigen Gut 2 fließenden Strom wird wiederum ein magnetisches Feld erzeugt, welches mit dem magnetischen Wanderfeld, welches durch den Induktor 5 erzeugt wird, in Wechselwirkung tritt und dadurch das stangenförmige Gut 2 mit einer Kraft in Richtung des magnetischen Wanderfelds beaufschlagt.

Da das magnetische Wanderfeld im Zentrum des Kanals 12 eine magnetische Flussdichte von mindestens 1 T hat, sind für das Aufbringen der für das Durchziehen des stangenförmigen Gutes 2 durch die Matrize 3 notwendigen Kräfte nur kompakte Induktoren 5 von überschaubarer Größe notwendig.

Bei den Leitern 9 der in Fig. 1 dargestellten ersten Spulen 8 handelt es sich um Leiter 9, die einen inneren Kanal aufweisen. Diese elektrischen Leiter 9 sind somit als Hohlleiter ausgebildet. Mittels nicht dargestellter Mittel zum Kühlen kann ein erstes Kühlmedium durch die Kanäle der Leiter 9 geführt werden, welches die elektrischen Leiter 9 von innen kühlt. Durch die Kühlung der elektrischen Leiter wird eine bedeutende Erhöhung der elektrischen Leitfähigkeit erreicht.

Bei dem in Fig. 2 dargestellten Querschnitt durch den Induktor 5 einer erfindungsgemäßen Vorrichtung 1 sind für äquivalente Bauelemente gleiche Bezugszeichen verwendet worden wie für die erfindungsgemäße Vorrichtung 1 gemäß Fig. 1. Der Induktor 5 gemäß Fig. 2 unterscheidet sich nämlich von dem in Fig. 1 dargestellten Induktor 5 lediglich durch die Ausbildung der elektrischen Leiter 9 der ersten Spulen 8. Hierbei handelt es sich um einen elektrischen Leiter 9, der aus einem supraleitenden Material besteht. Durch eine nicht dargestellte Kühlung kann dieser elektrische Leiter 9 auf eine Temperatur von ca. 77 °K gekühlt werden. Das supraleitende Material des elektrischen Leiters 9 erreicht dann seine Sprungtemperatur, wodurch die elektrische Leitfähigkeit sprunghaft zunimmt.

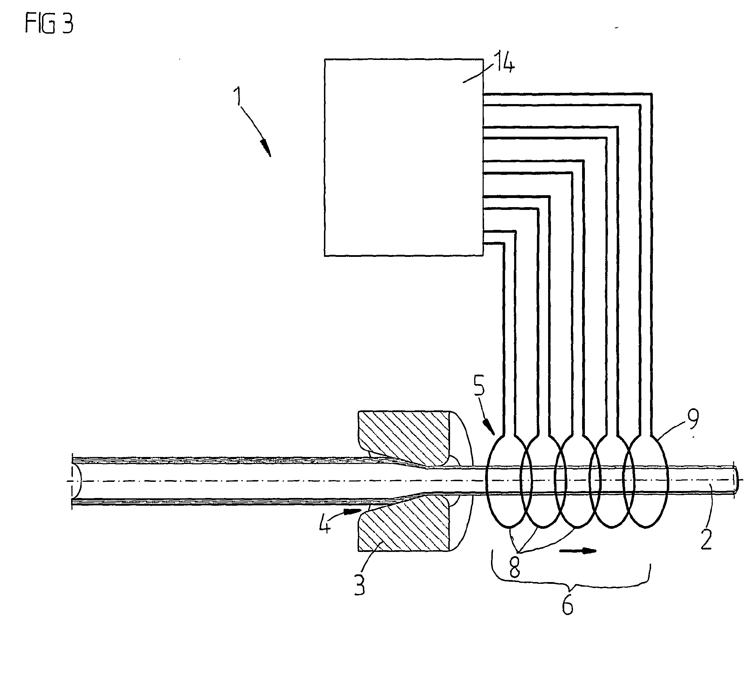

In Fig. 3 ist schematisch dargestellt, wie mittels einer erfindungsgemäßen Vorrichtung das umzuformende Gut 2 durch Durchziehen umgeformt werden kann. Die in Fig. 3 dargestellte erfindungsgemäße Vorrichtung weist dazu eine Matrize 3 mit einer Ziehdüse 4 auf, welche in Ziehrichtung vor einem Induktor 5 angeordnet ist. Der Induktor 5 weist Spulen 8 auf, von denen nur jeweils eine Wicklung des Leiters 9 schematisch dargestellt ist. Die Enden des Leiters 9 der Spulen 8 sind aus dem Induktor 5 hinausgeführt und sind mit einer elektrischen Spannungsquelle 14 zur Spannungsversorgung der Spulen 8 angeschlossen. Die Spulen 8 dieser ersten Gruppe 6 von Spulen 8 werden von der Spannungsquelle 14 so versorgt, dass in dem Induktor 5 ein magnetisches Wanderfeld erzeugt wird. Der Induktor 5 wirkt dann mit einem eingeführten umzuformenden Gut 2 als Linearmotor, wobei das umzuformende Gut 2 den Anker dieses Linearmotors bildet.

Zum Durchziehen wird zunächst die Spannungsversorgung der Spulen 8 der ersten Gruppe 6 von Spulen 8 des Induktors 5 aufgenommen. Das magnetische Wanderfeld wird erzeugt. Anschließend wird das umzuformende Gut 2 mit aus dem Stand der Technik bekannten Methoden in die Düse 4 der Matrize 3 eingeführt. Sobald das Ende des umzuformenden Guts 2 aus der Ziehdüse 4 heraustritt, wird das umzuformende Gut 2 in den Induktor 5 eingeführt, wodurch die das umzuformende Gut 2 in Bewegungsrichtung bzw. Ziehrichtung mit einer von dem magnetischen Wanderfeld in Wechselwirkung mit dem umzuformenden Gut 2 erzeugten Kraft beaufschlagt wird.

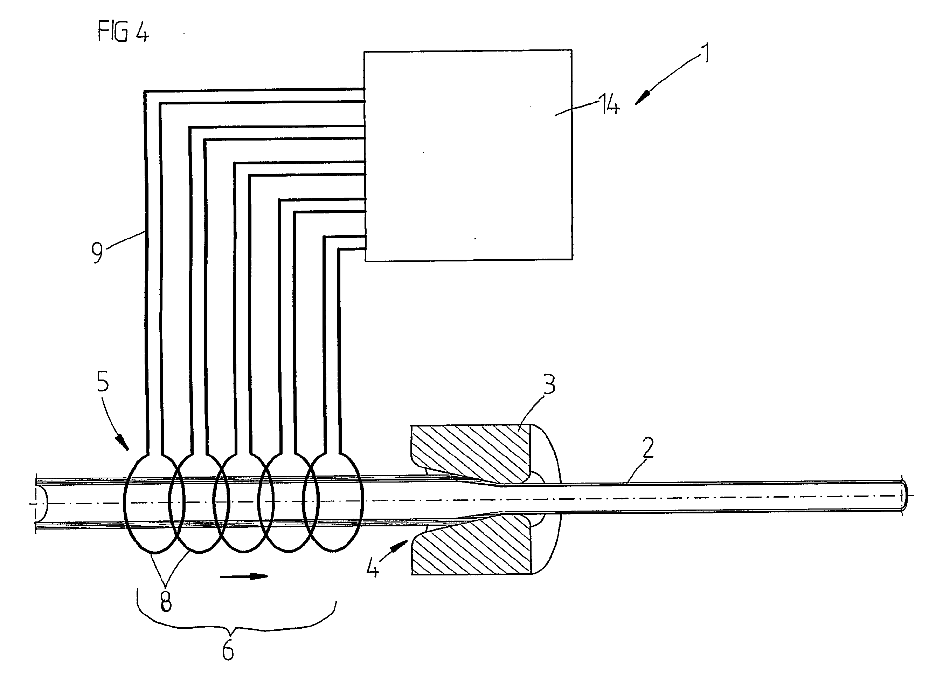

Anhand von Fig. 4 soll nun erläutert werden, wie das Durchdrücken mit einer erfindungsgemäßen Vorrichtung erfolgt. Die in der Fig. 4 schematisch dargestellte Vorrichtung zum Durchdrücken entspricht grundsätzlich dem Aufbau der Vorrichtung gemäß Fig. 3. Im Unterschied zu der in Fig. 3 dargestellten Vorrichtung weist die in Fig. 4 dargestellte Vorrichtung die erste Gruppe 6 von ersten Spulen 8 in Bewegungsrichtung des umzuformenden Guts 2 vor der Matrize 3 mit der Düse 4 auf.

Zunächst wird bei der erfindungsgemäßen Vorrichtung gemäß Fig. 4 durch Einschalten der Spannungsquellen 14 die Erzeugung des magnetischen Wanderfeldes durch den Induktor 5 eingeleitet. Anschließend wird das umzuformende Gut 2 in den Induktor 5 eingeführt, wodurch die bereits beschriebene Wechselwirkung zwischen Induktor 5 und dem umzuformenden Gut 2 eintritt, welches das stangenförmige umzuformende Gut 2 in die Bewegungsrichtung des Wanderfelds treibt. Dadurch wird das umzuformende Gut 2 in Richtung der Matrize 3 getrieben und in die Düse 4 der Matrize 3 eingeführt. Die von dem durch den Induktor 5 und dem umzuformenden Gut 2 gebildeten Linearmotor aufgebrachte Kraft reicht dabei aus, um das umzuformende Gut 2 durch die Düse 4 hindurchzudrücken. Durch das Durchdrücken des Gutes 2 wird das Gut 2 umgeformt. Es wird hier der Querschnitt des Gutes 2 reduziert.

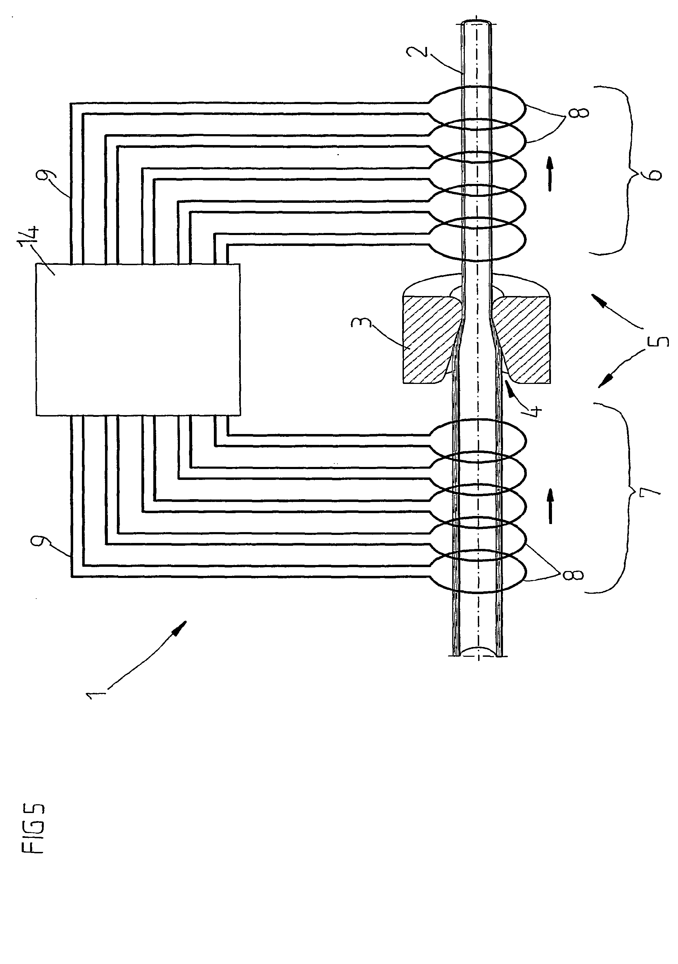

Anhand Fig. 5 soll nun erläutert werden, wie mit einer erfindungsgemäßen Vorrichtung 1 ein umzuformendes Gut 2 sowohl durchgedrückt als auch durchgezogen werden kann, um den Querschnitt dieses Gutes 2 zu reduzieren. Die in Fig. 5 dargestellte erfindungsgemäße Vorrichtung weist dazu einen Induktor 5 mit einer ersten Gruppe 6 von ersten Spulen 8 und einer zweiten Gruppe 7 von ersten Spulen 8 auf. Die elektrischen Leiter 9 dieser Spulen 8 sind aus dem Induktor herausgeführt und mit einer elektrischen Spannungsquelle 14 verbunden. Die Spulen der ersten Gruppe 6 sind dabei in Bewegungsrichtung des umzuformenden Gutes 2 hinter der Matrize 3 mit der Düse 4 angeordnet, während die Spulen der zweiten Gruppe 7 in Bewegungsrichtung vor der Matrize 3 mit der Düse 4 angeordnet sind.

Zum Umformen des stangenförmigen Gutes 2 werden die Spulen 8 der ersten Gruppe 6 und die Spulen 8 der zweiten Gruppe 7 mit elektrischer Spannung beaufschlagt. Dadurch wird in dem Induktor 5 ein Wanderfeld erzeugt, welches eine Bewegungsrichtung hat, welches die Bewegungsrichtung des umzuformenden Gutes 2 vorgibt. Anschließend wird das umzuformende Gut 2 in den Induktor 5 eingeführt. Das stangenförmige Gut 2 gelangt dabei zunächst in den durch die ersten Spulen 8 der zweiten Gruppe 7 der Spulen 8 ausgebildeten Teil des Kanals und bildet dort den Anker eines mit dem Induktor 5 ausgebildeten Linearmotors. Dabei wird das umzuformende Gut 2 durch die durch den Linearmotor erzeugte Kraft in die Bewegungsrichtung vorgetrieben und in die Düse 4 der Matrize 3 eingeführt. Die durch die Spulen 8 der zweiten Gruppe 7 in Wechselwirkung mit dem umzuformenden Gut 2 erzeugte Kraft drückt das umzuformende Gut 2 durch die Düse 4 hindurch und sobald das umzuformende Gut 2 die Düse 4 verlassen hat, tritt das umzuformende Gut 2 in den durch die Spulen 8 der ersten Gruppe 6 gebildeten Teil des Kanals ein, wo das umzuformende Gut 2 mit diesem Teil des Induktors 5 einen Linearmotor ausbildet, welcher wiederum das umzuformende Gut 2 mit einer Kraft in die Bewegungsrichtung des Wanderfelds beaufschlagt. Dadurch greifen sowohl im Bereich der ersten Gruppe 6 als auch im Bereich der zweiten Gruppe 7 der ersten Spulen 8 Kräfte an das umzuformende Gut 2 an.

Der Vorteil einer derartigen Vorrichtung 1 zum gleichzeitigen Durchziehen und Durchdrücken ist, dass hier keine mechanische Verbindung zur Übertragung der Kräfte auf das umzuformende Gut 2 besteht. D. h. es gibt keine bewegten Teile (Verbindungsmittel), welche der Kraftübertragung dienen. Das Problem bei der herkömmlichen Art und Weise der Kraftübertragung mittels mechanischer Verbindungsmittel auf das umzuformende Gut 2 ist nämlich, dass das umzuformende Gut vor und hinter der Düse 4 unterschiedliche Geschwindigkeiten aufweisen kann. Diese unterschiedlichen Geschwindigkeiten müssen dann zu einer optimalen Kraftübertragung zwischen den Verbindungsmitteln und dem umzuformenden Gut 2 sorgfältig ausgeregelt werden. Eine derartige aufwendige Regelung ist bei der erfindungsgemäßen Vorrichtung nicht notwendig, da hier keine mechanische Verbindung zwischen Verbindungsmitteln zum Antreiben des umzuformenden Guts 2 und dem umzuformenden Gut 2 besteht. Die Kraftübertragung erfolgt hier nämlich über elektromagnetische Wechselwirkung zwischen dem umzuformenden Gut 2 und dem Induktor 5 der erfindungsgemäßen Vorrichtung 1. Die elektromagnetische Kraftübertragung erfolgt berührungslos und bei unterschiedlichen Geschwindigkeiten vom magnetischen Wanderfeld des Induktors 5 und dem umzuformenden Gut 2 tritt ein Schlupf auf. Ein derartiger Schlupf ist beispielsweise auch von einem Asynchronmotor zwischen dem Rotor und dem Stator bekannt. Dieser Schlupf kann im Bereich der ersten Gruppe 6 von ersten Spulen 8, d. h. im Bereich hinter der Düse 4 anders sein als ein Schlupf im Bereich der zweiten Gruppe 7 von ersten Spulen 8, d. h. im Bereich vor der Düse 4. Eine komplizierte Regelung zum Ausgleich der unterschiedlichen Geschwindigkeit des umzuformenden Guts 2 vor und hinter der Düse 4 entfällt somit. Durch eine derartige Vorrichtung ist in einem Arbeitsgang eine erhöhte Reduktion des Gut 2 möglich.

### Bezugszeichenliste

- 1: Vorrichtung zum Umformen
- 2: Umzuformendes Gut
- 3: Matrize
- 4: Düse
- 5: Induktor
- 6: Erste Gruppe von Spulen
- 7: Zweite Gruppe von Spulen
- 8: Erste Spulen
- 9: Elektrischer Leiter
- 10: Scheibe
- 11: Äußerer abgekröpfter Rand
- 12: Kanal
- 13: Isolator
- 14: Elektrische Spannungsquelle

## Patentansprüche

1. Vorrichtung zum Umformen von stangenförmigen elektrisch leitenden und/oder magnetisierbaren Gütern (2) insbesondere zum Durchziehen und Durchdrücken mit folgenden Merkmalen:
- die Vorrichtung (1) weist eine Matrize (3) mit einer Düse (2) auf, welche das Werkzeug zum Umformen bildet;
- die Vorrichtung (1) weist einen Induktor (5) eines elektrischen Linearmotors auf, mit welchem ein elektrisches Wanderfeld erzeugbar ist;
- der Induktor (5) umfasst zumindest eine erste Gruppe (6) zumindest mit ersten Spulen(8);
- die ersten Spulen (8) der ersten Gruppe (6) sind axial nebeneinander angeordnet und bilden so einen Kanal (12) aus;
- mit dem Induktor (5) ist dem Kanal (12) ein Wanderfeld mit einer magnetischen Flussdichte mit einem Gradienten in axialer Richtung des Kanals (12) erzeugbar,
**dadurch gekennzeichnet, dass**
- die Spulen zumindest teilweise Leiter aufweisen, die einen spezifischen Widerstand von ρ = 0,017* 10-6 Ωm oder weniger haben, so dass im Gebrauch die magnetische Flussdichte eine Amplitude von größer als B = 1 T hat.

2. Vorrichtung nach dem vorhergehenden Anspruch, **dadurch gekennzeichnet, dass** der Induktor (5) eine zweite Gruppe (7) zumindest mit ersten Spulen (8) aufweist.

3. Vorrichtung nach dem vorhergehenden Anspruch, **dadurch gekennzeichnet, dass** die erste Gruppe (6) und die zweite Gruppe (7) auf entgegengesetzten Seiten der Matrize (3) angeordnet sind, wobei die ersten Spulen (8) beider Gruppen koaxial zur Düse (4) der Matrize (3) sind.

4. Vorrichtung nach einem der Ansprüche 2 bis 3, **dadurch gekennzeichnet, dass** die erste Gruppe (6) und gegebenenfalls die zweite Gruppe (7) zweite Spule aufweisen, welche die ersten Spulen umgreifen und koaxial zu den ersten Spulen sind.

5. Vorrichtung nach dem vorhergehenden Anspruch, **dadurch gekennzeichnet, dass** die erste Gruppe (6) und gegebenenfalls die zweite Gruppe (7) weitere, nämlich dritte, vierte, ...n-te Spulen aufweisen, welche die zweiten beziehungsweise dritten,...(n-1)ten Spulen umgreifen und koaxial zu den zweiten beziehungsweise dritten, ...(n-1)ten Spulen sind.

6. Vorrichtung nach einem der vorhergehenden Ansprüche, **dadurch gekennzeichnet, dass** zwischen koaxial nebeneinander angeordneten Spulen (8) je eine Scheibe (10) aus einem magnetisierbaren Material angeordnet ist.

7. Vorrichtung nach dem vorhergehenden Anspruch, **dadurch gekennzeichnet, dass** die Scheiben (8) einen äußeren Rand (11) haben, der zu einer Seite abgekröpft ist.

8. Vorrichtung nach dem vorhergehenden Anspruch, **dadurch gekennzeichnet, dass** der abgekröpfte Rand (11) eine benachbarte erste Spule (8) oder ein Paket aus benachbarten und koaxial angeordneten Spulen übergreift.

9. Vorrichtung nach einem der vorhergehenden Ansprüche, **dadurch gekennzeichnet, dass** die Vorrichtung (1) Mittel zur Kühlung des umzuformenden stangenförmigen Guts (2) aufweist.

10. Vorrichtung nach dem vorhergehenden Anspruch, **dadurch gekennzeichnet, dass** die Mittel zur Kühlung den Kanal (12) mit einem ersten Kühlmedium beaufschlagen.

11. Vorrichtung nach dem vorhergehenden Anspruch, **dadurch gekennzeichnet, dass** das erste Kühlmedium Luft oder ein Öl ist.

12. Vorrichtung nach dem vorhergehenden Anspruch, **dadurch gekennzeichnet, dass** die elektrische Stromdichte in den Spulen (8) größer als J = 10 A/mm² ist.

13. Vorrichtung nach einem der vorhergehenden Ansprüche, **dadurch gekennzeichnet, dass** die Spulen (8) zumindest teilweise Leiter (9) aufweisen, die supraleitend sind.

14. Vorrichtung nach dem vorhergehenden Anspruch, **dadurch gekennzeichnet, dass** die supraleitenden Leiter (9) aus einem Material bestehen, welches eine Sprungtemperatur von größer als T = 77 K hat.

15. Vorrichtung nach einem der vorhergehenden Ansprüche, **dadurch gekennzeichnet, dass** die Spulen (8) zumindest teilweise Leiter (9) aufweisen die einen Kanal (12) aufweisen.

16. Vorrichtung nach dem vorhergehenden Anspruch, **dadurch gekennzeichnet, dass** der Kanal (12) in dem Leiter (9) mit einem zweiten Kühlmedium beaufschlagbar ist.

17. Verfahren zum Umformen von stangenförmigen elektrisch leitenden und/oder magnetisierbaren Gütern (2) insbesondere Durchziehen und Durchdrücken, mit einer Vorrichtung nach einem der Ansprüche 1 bis 16 mit folgenden Schritten:
a) in einem Schritt wird das umzuformende Gut in einen Kanal (12) eingeführt;
b) in einem Schritt wird in dem Kanal (12) ein magnetisches Wanderfeld mit einem in Kanalrichtung liegenden Gradienten erzeugt, welches im Zentrum des Kanals (12) eine magnetische Flussdichte mit einer Amplitude von größer als B = 1 T hat;
in einem Schritt wird das Gut (2) in die Düse (4) der Matrize (3) eingeführt.

18. Verfahren nach dem vorhergehenden Anspruch, **dadurch gekennzeichnet, dass** zunächst Schritt c) gefolgt von Schritt a) gefolgt von Schritt b) durchgeführt wird.

19. Verfahren nach Anspruch 17, **dadurch gekennzeichnet, dass** zunächst Schritt c) gefolgt von Schritt b) gefolgt von Schritt a) durchgeführt wird.

20. Verfahren nach Anspruch 17, **dadurch gekennzeichnet, dass** zunächst Schritt a) gefolgt von Schritt b) gefolgt von Schritt c) durchgeführt wird.

21. Verfahren nach Anspruch 17, **dadurch gekennzeichnet, dass** zunächst Schritt b) gefolgt von Schritt a) gefolgt von Schritt c) durchgeführt wird.

22. Verfahren nach Anspruch 17, **gekennzeichnet durch** folgende Schritte:
a1) in einem Schritt wird das umzuformende Gut (2) in einen ersten Teil des Kanals(12) eingeführt;
a2) in einem Schritt wird das Gut (2) in einen zweiten Teil des Kanals (12) eingeführt;
b1) in einem Schritt wird in dem ersten Teil des Kanals (12) das magnetische Wanderfeld erzeugt;
b2) in einem Schritt wird in dem zweiten Teil des Kanals (12) das magnetische Wanderfeld erzeugt.

23. Verfahren nach Anspruch 22, **dadurch gekennzeichnet, dass** die Schritte in der Reihenfolge a1), c), b1)+b2) durchgeführt werden.

24. Verfahren nach Anspruch 22, **dadurch gekennzeichnet, dass** die Schritte in der Reihenfolge b1) + b2), a1), c), a2) durchgeführt werden.

## Claims

1. Device for reforming bar-shaped electrically conducting and/or magnetisable products (2), in particular for drawing and extrusion, with the following characteristics:
- the device (1) has a die (3) with a nozzle (2), which forms the reforming tool;
- the device (1) has a rotor (5) of an electric linear motor, with which an electrical travelling field can be produced;
- the rotor (5) includes at least a first group (6) at least with first coils (8);
- the first coils (8) of the first group (6) are arranged axially next to one another and thus form a channel (12);
- a travelling field with a magnetic flux density with a gradient in the axial direction of the channel (12) can be produced in the channel (12) with the rotor (5),
**characterized in that**
- at least some of the coils have conductors, which have a specific resistance of ρ = 0.017 * 10⁻⁶ Ωm or less, so that in use the magnetic flux density has an amplitude of greater than B = 1 T.

2. Device according to the preceding claim, **characterized in that** the rotor (5) has a second group (7) at least with first coils (8).

3. Device according to the preceding claim, **characterized in that** the first group (6) and the second group (7) are arranged on opposite sides of the die (3), the first coils (8) of both groups being coaxial with the nozzle (4) of the die (3).

4. Device according to one of Claims 2 to 3, **characterized in that** the first group (6) and if necessary the second group (7) have second coils, which encompass the first coils and which are coaxial with the first coils.

5. Device according to the preceding claim, **characterized in that** the first group (6) and if necessary the second group (7) have further, namely third, fourth, ...nth coils, which encompass the second, third, ... (n-1)th coils respectively and which are coaxial with the second, third, ... (n-1)th coils respectively.

6. Device according to one of the preceding claims, **characterized in that** a plate (10) made from a magnetisable material is arranged between each of the adjacent coaxially arranged coils (8).

7. Device according to the preceding claim, **characterized in that** the plates (8) have an outside edge (11), which is offset to one side.

8. Device according to the preceding claim, **characterized in that** the offset edge (11) overlaps an adjacent first coil (8) or a packet of adjacent and coaxially arranged coils.

9. Device according to one of the preceding claims, **characterized in that** the device (1) has means for cooling the bar-shaped product (2) to be reformed.

10. Device according to the preceding claim, **characterized in that** the cooling means act upon the channel (12) with a first cooling medium.

11. Device according to the preceding claim, **characterized in that** the first cooling medium is air or an oil.

12. Device according to the preceding claim, **characterized in that** the electrical current density in the coils (8) is greater than J = 10 A/mm².

13. Device according to one of the preceding claims, **characterized in that** at least some of the coils (8) have conductors (9), which are superconducting.

14. Device according to the preceding claim, **characterized in that** the superconducting conductors (9) are made of a material which has a transition temperature of greater than T = 77 K.

15. Device according to one of the preceding claims, **characterized in that** at least some of the coils (8) have conductors (9), which have a channel (12).

16. Device according to the preceding claim, **characterized in that** the channel (12) in the conductor (9) can be acted upon by a second cooling medium.

17. Method for reforming bar-shaped electrically conducting and/or magnetisable products (2), in particular drawing and extrusion, with a device according to one of Claims 1 to 16 with the following steps:
a) in one step, the product to be reformed is fed into a channel (12);
b) in one step, a magnetic travelling field, which has a gradient lying in the direction of the channel, and which has a magnetic flux density with an amplitude of greater than B = 1 T in the centre of the channel (12), is produced in the channel (12);
c) in one step, the product (2) is fed into the nozzle (4) of the die (3).

18. Method according to the preceding claim, **characterized in that** Step c) is carried out first followed by Step a) followed by Step b).

19. Method according to Claim 17, **characterized in that** Step c) is carried out first followed by Step b) followed by Step a).

20. Method according to Claim 17, **characterized in that** Step a) is carried out first followed by Step b) followed by Step c).

21. Method according to Claim 17, **characterized in that** Step b) is carried out first followed by Step a) followed by Step c).

22. Method according to Claim 17, **characterized by** the following steps:
a1) in one step, the product (2) to be reformed is fed into a first part of the channel (12);
a2) in one step, the product (2) is fed into a second part of the channel (12);
b1) in one step, the magnetic travelling field is produced in the first part of the channel (12) ;
b2) in one step, the magnetic travelling field is produced in the second part of the channel (12).

23. Method according to Claim 22, **characterized in that** the steps are carried out in the order a1), c), b1) + b2).

24. Method according to Claim 22, **characterized in that** the steps are carried out in the order b1) + b2), a1), c), a2).

## Revendications

1. Dispositif pour façonner des produits en forme de barres (2), électriquement conducteurs et/ou magnétisables, notamment par étirement et extrusion, présentant les caractéristiques suivantes:
- le dispositif (1) comprend une matrice (3) avec une buse (2), qui forme l'outil de façonnage ;
- le dispositif (1) comprend un inducteur (5) d'un moteur électrique linéaire, avec lequel on peut produire un champ électrique mobile;
- l'inducteur (5) comprend au moins un premier groupe (6) comportant au moins des premières bobines (8);
- les premières bobines (8) du premier groupe (6) sont disposées axialement l'une à côté de l'autre et forment ainsi un canal (12);
- avec l'inducteur (5), on peut produire dans le canal (12) un champ mobile avec une densité de flux magnétique présentant un gradient en direction axiale du canal (12),
**caractérisé en ce que**
- les bobines comprennent au moins partiellement des conducteurs, qui présentent une résistance spécifique de ρ = 0,017*10⁻⁶ Ωm ou moins, de telle manière que la densité de flux magnétique ait en fonctionnement une valeur supérieure à B = 1 T.

2. Dispositif selon la revendication précédente, **caractérisé en ce que** l'inducteur (5) comprend un second groupe (7) comportant au moins des premières bobines (8).

3. Dispositif selon la revendication précédente, **caractérisé en ce que** le premier groupe (6) et le second groupe (7) sont disposés sur des côtés opposés de la matrice (3), dans lequel les premières bobines (8) des deux groupes sont coaxiales à la buse (4) de la matrice (3).

4. Dispositif selon l'une quelconque des revendications 2 à 3, **caractérisé en ce que** le premier groupe (6) et éventuellement le second groupe (7) comprennent des deuxièmes bobines, qui entourent les premières bobines et qui sont coaxiales aux premières bobines.

5. Dispositif selon la revendication précédente, **caractérisé en ce que** le premier groupe (6) et éventuellement le second groupe (7) comprennent d'autres bobines, à savoir des troisièmes, quatrièmes, ... n^{ièmes} bobines, qui entourent respectivement les deuxièmes, troisièmes, ..., (n-1)^{èmes} bobines et qui sont coaxiales respectivement aux deuxièmes, troisièmes, ..., (n-1)^{èmes} bobines.

6. Dispositif selon l'une quelconque des revendications précédentes, **caractérisé en ce qu'**un disque (10) en un matériau magnétisable est chaque fois disposé entre des bobines (8) disposées coaxialement l'une à côté de l'autre.

7. Dispositif selon la revendication précédente, **caractérisé en ce que** les disques (10) comportent un bord extérieur (11), qui est coudé vers un côté.

8. Dispositif selon la revendication précédente, **caractérisé en ce que** le bord coudé (11) encadre une première bobine voisine (8) ou un paquet de bobines voisines et disposées coaxialement.

9. Dispositif selon l'une quelconque des revendications précédentes, **caractérisé en ce que** le dispositif (1) comprend des moyens pour refroidir le produit à façonner en forme de barre (2).

10. Dispositif selon la revendication précédente, **caractérisé en ce que** les moyens de refroidissement alimentent le canal (12) avec un premier fluide de refroidissement.

11. Dispositif selon la revendication précédente, **caractérisé en ce que** le premier fluide de refroidissement est l'air ou une huile.

12. Dispositif selon la revendication précédente, **caractérisé en ce que** la densité de courant électrique dans les bobines (8) est supérieure à J = 10 A/mm².

13. Dispositif selon l'une quelconque des revendications précédentes, **caractérisé en ce que** les bobines (8) comprennent au moins en partie des conducteurs (9), qui sont supraconducteurs.

14. Dispositif selon la revendication précédente, **caractérisé en ce que** les conducteurs supraconducteurs (9) sont constitués d'une matière, qui présente une température de transition supérieure à T = 77 K.

15. Dispositif selon l'une quelconque des revendications précédentes, **caractérisé en ce que** les bobines (8) comprennent au moins en partie des conducteurs (9), qui présentent un canal (12).

16. Dispositif selon la revendication précédente, **caractérisé en ce que** le canal (12) dans le conducteur (9) peut être alimenté avec un deuxième fluide de refroidissement.

17. Procédé pour façonner des produits en forme de barres (2), électriquement conducteurs et/ou magnétisables, notamment par étirement et extrusion, avec un dispositif selon l'une quelconque des revendications 1 à 16, présentant les caractéristiques suivantes:
a) dans une étape, on introduit le produit à façonner dans un canal (12);
b) dans une étape, on produit dans le canal (12) un champ magnétique mobile présentant un gradient dans la direction du canal, qui présente au centre du canal (12) une densité de flux magnétique ayant une valeur supérieure à B = 1 T ;
c) dans une étape, on introduit le produit (2) dans la buse (4) de la matrice (3).

18. Procédé selon la revendication précédente, **caractérisé en ce que** l'on exécute d'abord l'étape c), suivie de l'étape a) suivie de l'étape b).

19. Procédé selon la revendication 17, **caractérisé en ce que** l'on exécute d'abord l'étape c) suivie de l'étape b) suivie de l'étape (a).

20. Procédé selon la revendication 17, **caractérisé en ce que** l'on exécute d'abord l'étape a) suivie de l'étape b) suivie de l'étape c).

21. Procédé selon la revendication 17, **caractérisé en ce que** l'on exécute d'abord l'étape b) suivie de l'étape a) suivie de l'étape c).

22. Procédé selon la revendication 17, **caractérisé par** les étapes suivantes :
a1) dans une étape, on introduit le produit à façonner (2) dans une première partie du canal (12);
a2) dans une étape, on introduit le produit (2) dans une deuxième partie du canal (12);
b1) dans une étape, on produit le champ magnétique mobile dans la première partie du canal (12);
b2) dans une étape, on produit le champ magnétique mobile dans la deuxième partie du canal (12).

23. Procédé selon la revendication 22, **caractérisé en ce que** l'on exécute les étapes dans l'ordre a1), c), b1)+b2).

24. Procédé selon la revendication 22, **caractérisé en ce que** l'on exécute les étapes dans l'ordre b1)+b2), a1), c), a2).
